# EUROPEAN PATENT APPLICATION

(11) **EP 4 613 480 A1**
(43) Date of publication of application: **10.09.2025**
(21) Application number: 24162418.8
(22) Date of filing: 08.03.2024
(51) Int. Cl.: B32B 17/10, B32B 27/30

(54) **PROCESS FOR FUNCTIONALIZATION OF POLYVINYL ACETAL FILMS ON A POLYMER CARRIER**

(71) Applicant: Kuraray Europe GmbH, 65795 Hattersheim (DE)
(72) Inventor: Beekhuizen, Jan Arndt, 53859 Niederkassel (DE); Janßen, Christian, 65795 Hattersheim am Main (DE)
(74) Representative: Janßen, Christian Oliver

(57) **Abstract**

The present invention relates to a process for the production of a polyvinyl acetal film A comprising a functional layer on at least one side, wherein the functional layer on the at least one side of polyvinyl acetal film A is provided by a chemical vapour deposition process and wherein the polyvinyl acetal film A is provided on a polymer carrier film during the chemical vapour deposition process.

## Description

The present invention relates to a process for the production of a polyvinyl acetal film A comprising a functional layer on at least one side, wherein the functional layer on the at least one side of polyvinyl acetal film A is provided by a chemical vapour deposition process and wherein the polyvinyl acetal film A is provided on a polymer carrier film during the chemical vapour deposition process.

It is known to provide laminated glass with additional features like heat shielding by embedding a thin functionalized polymer film in the laminate. For this purpose, thin PET films are widely used since they show a high modulus of elasticity and good heat resistance and can thus be easily functionalized for example by chemical vapour deposition (CVD) techniques, e.g. by sputtering in high vacuum.

In order to produce laminated glass sheets these PET films are embedded between two layers of a plasticiser-containing polyvinyl acetal like polyvinyl butyral (PVB), which is the standard material for producing interlayers for laminated glass. This system has the disadvantage that at least three film layers (one layer functionalized PET and two layers of PVB film) have to be used since PET cannot be melted directly on a glass surface. This leads to additional complexity and weight.

Thus, it would be preferable to directly functionalize polyvinyl butyral films (PVB) in a CVD process since the interlayers for laminated glass are generally made of PVB.

However, functionalization of a PVB film by sputtering techniques has the disadvantage that PVB films are much softer than the commonly used PET films, especially when the PVB contains substantial amounts of plasticizer. Such PVB films would not withstand the rather high temperatures required for the sputtering processes.

To this end, US20150202846A1 discloses the use of non-plasticized PVB films for direct sputtering. While this might increase the stiffness of the films sufficiently at lower temperatures, the document also teaches that *"the PVD or sputtering is controlled such that the polymer substrate temperature remains under about 100 °C during the deposition process, and more preferably remains under about 75° C."*

From an economical perspective, it would be an advantage to use a process for the functionalization of PVB films by CVD which need no or much less cooling during the sputtering process.

Thus, there is still a need for improved processes for the sputtering onto polyvinyl acetal.

Now therefore, the current invention concerns a process for the production of a polyvinyl acetal film A comprising a functional layer on at least one side, wherein the functional layer on the at least one side of polyvinyl acetal film A is provided by a chemical vapour deposition process and wherein the polyvinyl acetal film A is provided on a polymer carrier film during the chemical vapour deposition process.

It has been found that the polyvinyl acetal film can be functionalized in a CVD process like sputtering at elevated temperatures when the films are supported by a polymer carrier film.

The material of the polymer carrier film can be chosen from any material which is compatible with the polyvinyl acetal as well as with the CVD process. It is preferred to use a polymer material selected from the group consisting of polylactic acid, acrylonitrile-butadiene-styrene copolymers, polyamides, polycarbonates, polyethylene terephthalate (PET), polyethylene terephthalate copolymers, polyhydroxyalkanoates, polyurethanes, polyolefines such as polyethylene or polypropylenes, acrylonitrile styrene acrylates, polyacrylates, polymethacrylates, polyvinyl alcohol and cellulose triacetate. Most preferably, the carrier contains polyethylene terephthalate (PET) and specifically, the carrier is a film consisting of PET.

Preferably, the thickness of the polymer carrier film is from 10 to 500 µm, more preferably from 25 to 250 µm, and most preferably from 50 to 100 µm.

Also preferably, film A is adhered to the polymer carrier film with an adhesive strength of 0.05 to 10 J/cm², preferably 0.1 - 5 J/cm² and most preferably 0.5 - 3 J/cm².

The thickness of film A is preferably 10 - 350 µm, more preferably 10 - 150 µm and most preferably 20 - 50 µm.

Films A used in accordance with the invention may contain less than 10 % by weight, less than 8 % by weight, less than 6 % by weight, less than 4 % by weight, less than 3 % by weight, less than 2 % by weight, less than 1 % by weight or even no added plasticiser (0.0 % by weight).

The functional layer preferably contains heat-shielding particles, for example ITO, ATO, AZO, IZO, zinc antimonates, tin-doped zinc oxide, silicon-doped zinc oxide, gallium-doped zinc oxide, tungstates, such as LiWOs, NaWOs, CsWOs, lanthanum hexaboride or cerium hexaboride.

Preferred deposition methods for the functional layer are vapor deposition methods in vacuum. Vapor deposition is a family of processes that is used to deposit layers of atoms or molecules from the vapor phase onto a solid substrate in a vacuum chamber. Two types of processes used are sputtering and electron beam evaporation. More preferably, the sputtering method is used.

The process of sputtering can be achieved as described in the following with the example of sputtering ITO onto a PVB film A.

The film A is provided on the polymer carrier film in a solvent casting process by directly coating a solution of a suitable polyvinyl acetal on the polymer carrier film made from PET with subsequent drying.

The sputtering process takes place in a vacuum chamber. The PVB film A on the carrier film is placed inside the chamber, and the chamber is evacuated to create a low-pressure environment.

The target ITO is mounted in the chamber, facing the PVB film. A process gas, often argon, is introduced into the chamber. The gas is ionized to create a plasma. The plasma generates energetic ions that will bombard the ITO target. The ITO target is bombarded by the energetic ions, causing atoms or molecules of ITO to be ejected from the target surface. This is the actual sputtering. The ejected ITO particles travel through the vacuum chamber and deposit onto the surface of the PVB film, forming a thin and uniform ITO layer. During the sputtering process, film thickness and other parameters are monitored to control the deposition and ensure the desired characteristics of the ITO layer. After deposition, the quality of the ITO layer is inspected to ensure it meets the required specifications, such as transparency and conductivity.

The resulting ITO-coated PVB film A can be used in various applications, including as a transparent electrode in photovoltaic devices, flat-panel displays, touchscreens, and other electronic devices where transparent and conductive coatings are essential. The sputtering process provides a precise and controlled method for depositing thin films with specific properties onto the film A. Preferably, the polymer carrier film is removed from film A by peeling before the final application.

Another aspect of the present invention concerns a laminated glass comprising a stack of interlayer films comprising the polyvinyl acetal film A as describe herein and a polyvinyl acetal film B comprising plasticizer in a total amount of 16 to 60 % by mass based on a total mass of the resin composition sandwiched between two sheets of glass.

Such polyvinyl acetal films B, especially polyvinyl butyral films B are known in the art and can be obtained commercially, e.g. the Trosifol^{®} product range available from Kuraray Europe GmbH.

Preferably, the functional layer on the at least one side of film A is facing the film B. In this orientation, the adhesion to the glass is not diminished by the functional layer and the functional layer is more protected before and during the lamination process.

Also preferably, the functional layer on the at least one side of the film A is provided with a coating or a film comprising polyvinyl butyral and/or polyurethane in order to improve the adhesion to the glass in case the functional layer is chosen to face the glass surface.

The films A and B may contain, in the starting state prior to lamination of the layers and also in the intermediate layer stack located in the laminated glass laminate, a single plasticiser as well as mixtures of plasticisers both of different and identical composition.

Plasticiser-containing films B used in accordance with the invention contain at least 16 % by weight, such as 16.1 - 36.0 % by weight, preferably 22.0 - 32.0 % by weight and in particular 26.0 - 30.0 % by weight plasticiser.

The thickness of a film B is 450 - 2500 µm, preferably 600 - 1000 µm, preferably 700 - 900 µm.

The films can contain polyvinyl acetals each having a different polyvinyl alcohol content, degree of acetalisation, residual acetate content, ethylene proportion, molecular weight and/or different chain lengths of the aldehyde of the acetal groups.

The polyvinyl acetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The films A or B preferably contain polyvinyl acetals having a proportion of polyvinyl acetate groups based on the layers, either identically or differently, of 0.1 to 20 mol %, preferably 0.5 to 3 mol %, or 5 to 8 mol %.

The polyvinyl alcohol content of the used polyvinyl acetals PA of film A having a lower plasticiser content in the starting state may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content of the used polyvinyl acetals PB of film B, which is richer in plasticiser in the starting state, may be between 14 - 26 % by weight, 16 - 24 % by weight, 17 - 23 % by weight and preferably between 18 and 21 % by weight.

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

In addition, films A and B may contain further additives, such as residual quantities of water, UV absorber, antioxidants, adhesion regulators, optical brighteners or fluorescent additives, stabilisers, colorants, processing aids, organic nanoparticles, pyrogenic silicic acid and/or surface active substances. In particular, film B may comprise 0.001 to 0.1 % by weight of alkaline salts and/or alkaline earth salts of carboxylic acids as adhesion regulators.

In another embodiment, film A have a higher glass temperature Tg (measured by DSC) than film B. Accordingly, glass temperature Tg (measured by DSC) of film A is more than 5 °C, more than 10 °C or more than 15 °C higher than the glass temperature Tg (measured by DSC) of film B.

Preferable, film A has a glass temperature Tg (measured by DSC) higher than 25 °C, or higher than 30°C, or higher than 40 °C and most preferred higher than 50 °C.

To laminate the PVB films, the methods with which a person skilled in the art is familiar can be used with and without prior production of a pre-laminate.

What are known as autoclave processes are carried out at an increased pressure from approximately 10 to 15 bar and temperatures from 100 to 145 °C over approximately 2 hours. Vacuum bag or vacuum ring methods, for example according to EP 1 235 683 B1, function at approximately 200 mbar and 130 to 145 °C.

What are known as vacuum laminators can also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

The thin films A are generally produced by melt extrusion, solvent casting or in the form of a blown film most preferably by solvent casting directly onto the polymer carrier film.

### Experimental Part

### Preparation of film A on the polymer carrier film

A polyethylene terephthalate (PET) film with a matt surface (grade #50 - X42G commercially available from Toray Industries, Inc.) with a thickness of 50 µm was used as polymer carrier film. The surface roughness (Rz) was 4.0 µm.

A 15.5 % by weight solution of polyvinyl butyral (PVB) powder (commercially available grade Mowital^{®} B60H) dissolved in a mixture of ethanol / ethyl acetate = 50:50 % by weight was used as coating fluid.

A commercially available standard solvent coating apparatus including an unwinder, a coater, a dryer and a winder was used in slot die coating mode. The substrate speed was 1.1 m/min and the wet thickness on the moving substrate was 200 µm. The coating was conducted at a temperature of 26 °C. The gap between the coating lip and the moving substrate was 300 µm.

The drying was performed in three sections and the respective temperatures in the drying sections were set to 60 °C, 70 °C and 125 °C. The total drying time was approximately 4 min.

The films A are directly used for the production of the functional layer in a conventional sputtering process.

After the functionalization, the polymer carrier films is removed from film A by peeling and the free-standing film A is used for the production of a glass laminate together with a conventional plasticizer-containing film B.

## Claims

1. A process for the production of a polyvinyl acetal film A comprising a functional layer on at least one side, wherein the functional layer on the at least one side of polyvinyl acetal film A is provided by a chemical vapour deposition process and wherein the polyvinyl acetal film A is provided on a polymer carrier film during the chemical vapour deposition process.

2. The process according to claim 1 wherein the film A comprises plasticizer in a total amount of 0 to 10% by mass based on a total mass of the resin composition.

3. The process according to claim 1 or 2 wherein the polyvinyl acetal resin film A has a thickness of 10 to 350 µm.

4. The process according to any one of the claims above wherein the functional layer is a metallic heat-shielding coating, electrically conductive structure or transparent electrode.

5. The process according to any one of the claims above wherein the polymer in the polymer carrier film is selected from the group consisting of polylactic acid, acrylonitrile-butadiene-styrene copolymer, polyamides, polycarbonates, polyethylene terephthalate (PET), polyethylene terephthalate copolymers, polyhydroxyalkanoates, polyurethanes, polyolefines such as polyethylene or polypropylenes, acrylonitrile styrene acrylate, polyacrylates and polymethacrylates and polyvinyl alcohol.

6. The process according to any one of the claims above wherein the polymer in the polymer carrier film is polyethylene terephthalate (PET).

7. The process according to any one of the claims above wherein the film A is provided by a solvent casting process on the polymer carrier film.

8. The process according to any one of the claims above wherein the functional layer comprises particles of silver, gold, indium, aluminium or rhodium, or an alloy or an oxide thereof, preferably silver particles and/or indium titanium oxide.

9. The process according to any one of the claims above wherein the chemical vapour deposition process is a process of sputtering particles of silver, gold, indium, aluminium or rhodium, or an alloy or an oxide thereof in high vacuum.

10. The process according to any one of the claims above wherein the polyvinyl acetal is polyvinyl butyral.

11. A polyvinyl acetal film provided on a polymer carrier film comprising a functional layer produced in a chemical vapour deposition process.

12. The polyvinyl acetal film according to claim 11 wherein the polymer carrier film is polyethylene terephthalate (PET) and the chemical vapour deposition process is a process of sputtering particles of silver, gold, indium, aluminium or rhodium, or an alloy or an oxide thereof in high vacuum.

13. A laminated glass comprising a stack of interlayer films comprising the polyvinyl acetal film A according to claim 11 or 12 and a polyvinyl acetal film B comprising plasticizer in a total amount of 16 to 60 % by mass based on a total mass of the resin composition sandwiched between two sheets of glass.

14. The laminated glass according to claim 13 wherein the functional layer on the at least one side of film A is facing the film B.

15. The laminated glass according to claim 13 wherein the functional layer on the at least one side of the film A is facing the glass and is provided with a coating comprising polyvinyl butyral and/or polyurethane.
